# EUROPEAN PATENT APPLICATION

(11) **EP 2 629 060 A2**
(43) Date of publication of application: **21.08.2013**
(21) Application number: 13275029.0
(22) Date of filing: 13.02.2013
(51) Int. Cl.: G01D 4/00

(54) **Interface unit for automated meter reading (AMR)**

(30) Priority: 14.02.2012 GB 201202532
(71) Applicant: EA Energy Solutions Limited, Manchester, Lancashire M3 4SB (GB)
(72) Inventor: Jones, Alan, Manchester, Lancashire M3 4SB (GB)
(74) Representative: Wilson Gunn

(57) **Abstract**

An interface unit 100 according to the present invention comprises an input means 101 adapted for connection to an encoder meter serial output; a converter means 102 operable to receive an encoder meter output signal and translate it into a corresponding pulse meter output signal; and AMR output means 103 suitable to enable communication of the pulse output signal to an AMR device. In this manner the interface unit 100 can allow AMR devices adapted for use with pulse meters to be connected to and used with encoder meters.

## Description

The present invention relates to an interface unit for use in automated meter reading (AMR). In particular, the present invention relates to an interface unit operable to interface between a utility meter and a meter interrogating device to facilitate AMR.

Utility meters are operable to measure a supplied quantity of a utility (e.g. electrical energy, volume of gas or water etc) and output an indicative reading. Typically, this reading can be in the form of a visual display on the exterior of the meter. In addition, many meters for industrial or commercial premises additionally output an electrical signal corresponding to the reading. This electrical signal can be connected to an AMR device to enable remote reading of the meter. This can reduce the cost of obtaining meter readings, increase their accuracy and by way of automated monitoring of the readings allow building operators to increase their efficiency.

There are two types of typical output signals form such meters. These are 'pulse' type meters, which make up the majority, and 'encoder' type meters where the reading is provided as absolute data.

In pulse type meters, when the meter is interrogated by an AMR device, a pulse (more typically a series of pulses) is output corresponding to consumption as it occurs. In some meters, the pulse output might be determined by the rotation of a mechanical digit on the meter reading which indicates finite quantities of consumption in response to supply. Typically a simple two core cable can be used to transmit the pulse to the AMR device. The pulse may be indicated by the opening and closing of a mechanical switch or by a semiconductor device becoming conductive for a short period of time.

In encoder type meters, one or more optical sensors are operable to measure the position of one or more encoder wheels (which may correspond to numbered wheels on the meter display). In response to interrogation by an AMR device, a signal indicative of the encoder wheel position and an absolute data reading is output. Typically, this signal is output via a serial port to an AMR device.

In view of the different signals produced and the different connections required, devices for interrogating pulse type meters are not suitable for interrogating encoder type meters and vice versa. This bifurcation of standards increases cost and complexity for those providing AMR services.

It is therefore an object of the present invention to provide a solution that, at least partly, overcomes or alleviates the above problem.

In accordance with a first aspect of the present invention there is provided an interface unit comprising: input means operable to connect to an encoder meter serial output; a converter means operable to receive an encoder meter output signal and translate it into a corresponding pulse meter output signal; and AMR output means suitable to enable communication of the pulse output signal to an AMR device.

In this manner, the present invention provides an interface unit allowing AMR devices suitable for use with the more numerous pulse type meters to also be used with encoder type meters.

The converter means may be a digital calculating engine operable to calculate successive differential readings and convert said differential readings to an equivalent pulse stream suitable for pulse counting devices. Preferably, said digital calculating engine includes means to simulate a mechanical switch.

In some embodiments, the interface unit may be adapted to divide the pulse signal output between multiple AMR devices. This may be achieved by a suitable pulse splitter device adapted to divide and share the pulse in parallel by a purely passive means. The pulse splitter device may be incorporated into the interface unit or may be a separate device adapted to be connected to the interface unit. In such embodiments, the AMR output means or the component of the converter means connecter to the AMR output may comprise a volt free switch. The volt free switch may be a relay contact, bipolar open collector or FET open drain. The pulse splitter device may comprise voltage isolation and blocking by means of Schottky diodes. Preferably, the pulse splitter device comprises a bridge of Schottky diodes adapted to arrange the output to be polarity independent to the interrogating device. In further embodiments, the pulse splitter device is adapted to share the pulse between two or more interrogating devices by adding more diode bridges.

One such example of a pulse splitter device is disclosed in our co-pending UK Patent application GB2460026.

The interface unit may be powered by the meter, the AMR device or an independent supply. The independent supply may be an internal battery, if desired or appropriate.

The interface unit may be provided within a protective housing. The housing may be adapted to co-operate with or connect with the housing of an AMR device and/or an encoder meter. Additionally or alternatively, the housing may be adapted to cooperate with and/or retain cables adapted to connect the interface unit to meters or AMR devices.

In some embodiments, the interface unit may be provided with a serial output means, connected to the input means by bypassing the converter means. This would allow the interface unit to be used where there is an encoder meter and it is desired to be used with a combination of encoder adapted and pulse adapted AMR devices. This may happen when additional AMR devices are added to an AMR system, perhaps to allow a user to monitor their efficiency in addition to allowing a provider to monitor supply.

The meters may be electricity meters, gas meters or water meters. The meters may be smart meters.

In accordance with a second aspect of the present invention there is provided an AMR system comprising: an encoder meter; an AMR device adapted for use with a pulse meter; and an interface unit according to a first aspect of the present invention connected therebetween.

The system of the second aspect of the present invention may incorporate any or all features of the first aspect of the present invention, as required or as desired.

The system may comprise a plurality of meters. In such cases the meters may all be encoder meters or there may be a mixture of encoder meters and pulse meters. Where there is a mixture, the interface units are preferably only provided for the encoder meters.

In order that the invention is more clearly understood, one embodiment will now be described further below, by way of example only and with reference to the attached drawings in which:
- Figure 1: is a schematic block diagram of a first embodiment of an interface unit according to the present invention;
- Figure 2: is a schematic block diagram of a second embodiment of an interface unit according to the present invention;
- Figure 3: is a schematic block diagram of a third embodiment of an interface unit according to the present invention; and
- Figure 4: is a schematic block diagram of an interface unit according to the present invention in use to monitor an encoder meter.

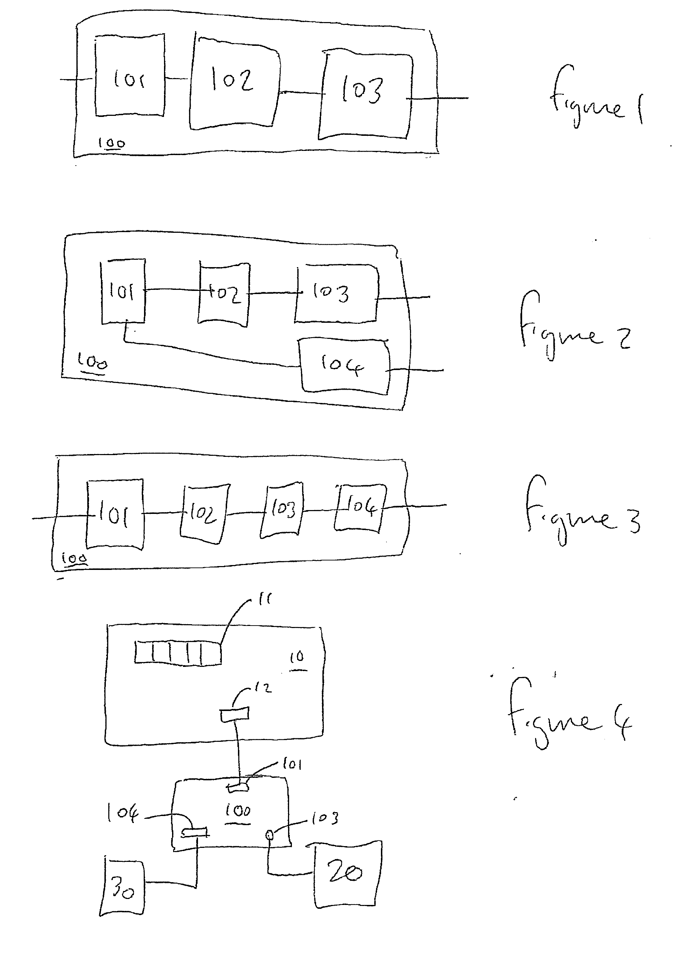

Turning now to figure 1, an interface unit 100 according to the present invention is shown. The interface unit comprises an input means 101 adapted for connection to an encoder meter serial output; a converter means 102 operable to receive an encoder meter output signal and translate it into a corresponding pulse meter output signal; and AMR output means 103 suitable to enable communication of the pulse output signal to an AMR device. In this manner the interface unit 100 can allow AMR devices adapted for use with pulse meters to be connected to and used with encoder meters.

Typically, the input means 101 is a serial socket allowing a serial connection to be made and, where necessary, provides a power to energise the encoder meter, using a suitable cable to the serial output of an encoder meter. Typically, the output means is a socket such as those provided for AMR connections to a pulse meter.

The converter means 102 may be implemented bysuitable electronics Typically these electronics might comprise a digital calculating engine and means to simulate a mechanical switch. The digital calculating engine may be operable to calculate successive differential consumption readings and convert these readings to a pulse stream.

Turning now to figure 2, an alternative embodiment of an interface unit 100 is shown. In the alternative embodiment, the interface unit is additionally provided with a serial output 104. This facilitates use of additional pulse adapted AMR devices alongside existing encoder adapted AMR devices when upgrading an AMR system operating with an encoder meter.

A further alternative embodiment of an interface unit 100 is shown in figure 3. In this embodiment, the interface unit 100 is additionally provided with a pulse splitter device 105 which enables the pulse output to be divided and shared between a plurality of AMR devices. Typically, the pulse splitter device is of the type described in our co-pending application GB2460026. The skilled man will of course appreciate that it is possible to provide an embodiment of the interface unit 100 incorporating both a serial output and a pulse splitter 105.

Turning now to figure 4, an illustration of the interface unit in use is shown. An encoder meter 10 is provided to monitor use of a utility in a building or part thereof. The meter has a set of wheels 11 providing a visual indication of the use to an observer. In addition, the meter 10 comprises one or more encoder wheels (not shown) which may be incorporated into or connected to eth display 11. An optical sensing arrangement (not shown) is operable to detect the position of the encoder wheels and output an electrical signal to serial output 12.

The serial output 12 is connected via a serial cable 13 to serial input 101 of the interface unit 100. Signals received at the serial input 101 are passed to the converter means 102 for conversion to pulse signals and output via pulse output 103. Additionally, if the interface 100 includes a serial output 104, signals are passed to the serial output 104 bypassing the converter means 102.

The interface 100 may then facilitate connecting a pulse type AMR device 20 to the pulse output. The pulse type AMR device can be used to monitor use of the utility for billing or other purposes as desired. Where there is a pulse splitter 105 provided in the interface unit 100, multiple pulse type AMR devices may be fitted. This can allow multiple other systems to monitor utility use for various purposes. Where there is a serial output 104 provided in the interface unit 100, a serial type AMR device 30 may also be fitted.

It is of course to be understood that the invention is not to be restricted to the details of the above embodiment, which is described by way of example only.

## Claims

1. An interface unit comprising: input means operable to connect to an encoder meter serial output; a converter means operable to receive an encoder meter output signal and translate it into a corresponding pulse meter output signal; and AMR output means suitable to enable communication of the pulse output signal to an AMR device.

2. An interface unit as claimed in claim 1 wherein the converter means is a digital calculating engine operable to calculate successive differential readings and convert said differential readings to an equivalent pulse stream suitable for pulse counting devices.

3. An interface unit as claimed in claim 2 wherein the digital calculating engine includes means to simulate a mechanical switch.

4. An interface unit as claimed in any preceding claim wherein the AMR output means or the component of the converter means connecter to the AMR output comprises a volt free switch.

5. An interface unit as claimed in claim 4 wherein the volt free switch is a relay contact, bipolar open collector or FET open drain.

6. An interface unit as claimed in any preceding claim wherein the interface unit is adapted to divide the pulse signal output between multiple AMR devices.

7. An interface unit as claimed in claim 6 wherein this is achieved by a pulse splitter device adapted to divide and share the pulse in parallel by a purely passive means.

8. An interface unit as claimed in any preceding claim wherein the interface unit is provided within a protective housing.

9. An interface unit as claimed in claim 8 wherein the housing is adapted to co-operate with or connect with the housing of an AMR device and/or an encoder meter.

10. An interface unit as claimed in claim 8 or claim 9 wherein the housing is adapted to cooperate with and/or retain cables adapted to connect the interface unit to meters or AMR devices.

11. An interface unit as claimed in any preceding claim wherein the interface unit is provided with a serial output means, connected to the input means by bypassing the converter means.

12. An AMR system comprising: an encoder meter; an AMR device adapted for use with a pulse meter; and an interface unit according to any one of claims 1 to 11 connected therebetween.

13. An AMR system as claimed in claim 12 wherein the system comprises a plurality of meters.

14. An AMR system as claimed in claim 12 or claim 13 wherein the meters are all encoder meters.

15. An AMR system as claimed in claim 12 or claim 13 wherein the meters are a mixture of encoder meters and pulse meters and wherein the interface units are only provided for the encoder meters.
